# EUROPÄISCHE PATENTSCHRIFT

(11) **EP 3 995 750 B1**
(45) Veröffentlichungstag und Bekanntmachung des Hinweises auf die Patenterteilung: **09.08.2023**
(21) Anmeldenummer: 20206663.5
(22) Anmeldetag: 10.11.2020
(51) Int. Cl.: F24H 1/18, F28D 20/00

(54) **WÄRMESPEICHER**
HEAT STORAGE DEVICE
ACCUMULATEUR DE CHALEUR

(43) Veröffentlichungstag der Anmeldung: 11.05.2022
(73) Patentinhaber: Mahmutovic, Nedzib, 4060 Leonding (AT)
(72) Erfinder: Mahmutovic, Nedzib, 4060 Leonding (AT)
(74) Vertreter: Patentanwaltskanzlei Matschnig & Forsthuber OG

(56) Entgegenhaltungen:
- DE-A1- 2 637 482
- DE-A1- 19 945 053
- DE-A1-102015 221 562

## Beschreibung

Die Erfindung betrifft einen Wärmespeicher zur Speicherung von Wasser mit zumindest einem Wärmetauscher zur Erwärmung des Wassers, welcher Wärmespeicher Folgendes umfasst:
- einen Behälter, in welchem das zu erwärmende Wasser speicherbar ist, welcher Behälter einen zylinderförmigen Mantel umfasst, an dessen Oberseite ein Deckel und an dessen Unterseite ein Boden angeordnet ist,
- zumindest einen Wärmetauscher, welcher innerhalb des Behälters angeordnet ist und eingerichtet ist, im Behälter angeordnetes Wasser mit Hilfe eines in dem zumindest einen Wärmetauscher transportierbaren Wärmeträgermediums zu erwärmen, und
- eine erste Isolierungseinrichtung, welche eingerichtet ist, Wärmefluss von im Behälter gespeicherter Wärme in Richtung außerhalb des Behälters zu isolieren, wobei die erste Isolierungseinrichtung auf einer Außenseite des Behälters angeordnet ist.

So ein Wärmespeicher ist aus DE 10 2015 221562 A1 bekannt.

Speicherverluste sind ein Hauptkriterium der energetischen Bewertung von Wärmespeichern. Speicherverluste entstehen grundsätzlich durch eine vorhanden Temperaturdifferenz zwischen dem Wärmespeicher und der Umgebung, wobei im Allgemeinen zwischen inneren und äußeren Verlusten unterschieden wird (siehe hierzu auch *"*Beitrag zur thermodynamischen Analyse und Bewertung von Wasserwärmespeichern in Energieumwandlungsketten" [Dissertation Dipl. Ing. Robert Huhn 2006 - Fakultät für Maschinenwesen der Technischen Universität Dresd*en]).*

Äußere Wärmeverluste unterteilen sich in Wärmeverluste durch die Behälteroberfläche (Boden-, Deckel- und Mantelfläche) und Wärmeverluste an Anschlussleitungen und verschlossenen Stutzen an die Umgebung.

Für möglichst geringe innere Verluste sind möglichst viele Schichten unterschiedlicher Temperatur des Speichermediums, wobei die Ausbildung von Schichten unterschiedlicher Temperatur innerhalb des Wärmespeichers unter anderem von der Speicherkonstruktion und der Art der Einkopplung in das vorhandene System abhängt. Eine gute Schichtqualität, also möglichst viele Schichten unterschiedlicher Temperatur, trägt maßgeblich zu einem besseren Betriebsverhalten bei. Je höher der Grad der Schichtung (Temperaturdifferenz des Wassers über die gesamte Speicherhöhe) ist, desto effektiver ist das ganze Speichersystem.

Durch das Temperaturgefälle im Inneren des Wärmespeichers bzw. Behälters kommt es zu einer geringeren Rücklauftemperatur zum Wärmeerzeuger, was sich wiederum positiv auf den Nutzungsgrad des Wärmeerzeugers auswirkt. Es sei hier auf die *"*Überarbeitung der Vergabegrundlage für das Umweltzeichen Warmwasserspeicher (PAL-ZU 124) - Expertise" [Dirk Jepsen - im Auftrag des Umweltbundesamts] vom März 2011 verwiesen, welche allgemeine Grundlagen zu diesem Thema beschreibt.

Innere Verluste verursachen daher eine schlechtere Temperaturschichtung sowie deren schnelleren Abbau. Sie führen auf diese Art zu höheren mittleren Rücklauftemperaturen vom Wärmespeicher hin zu einem Wärmeerzeuger. Speicherverluste sind ein Hauptkriterium der energetischen Bewertung von Wärmespeichern. Solche Speicherverluste entstehen beispielsweise durch die vorhandene Temperaturdifferenz zwischen dem Speicher und der Umgebung. Eine entsprechend effiziente Isolierung des Behälters ist daher unabdingbar und trägt maßgeblich zum Nutzungsgrad des Wärmespeichers bei.

Es ist eine Aufgabe der Erfindung einen verbesserten Wärmespeicher bereitzustellen.

Diese Aufgabe wird dadurch gelöst, dass die erste Isolierungseinrichtung zumindest eine Lage gebildet aus einer Aluminiumverbundfolie aufweist, wobei eine Aluminiumverbundfolie aus zwei Aluminiumschichten gebildet ist, welche mehrere Luftpolster in regelmäßiger Anordnung einschließen.

Die erste Isoliereinrichtung ersetzt somit effektiv das handelsübliche Styropor, wobei die Aluminiumverbundfolie abhängig von der Anzahl der Lagen, vorzugsweise zwischen einer und mehreren Lagen, pro Folie ungefähr 20 bis 25 mm dicken Styropor ersetzt.

Ferner ist die Aluminiumverbundfolie aufgrund der eingeschlossenen Luft erheblich leichter als Styropor, wobei das Gewicht der gesamten ersten installierten ersten Isoliervorrichtung bei einem handelsüblichen Wärmespeicher für Einfamilienhäuser ein Gewicht von ungefähr 3 bis 4 kg beträgt.

Es sei angemerkt, dass eine Lage der Aluminiumverbundfolie eine Dicke von bis zu 5 mm aufweisen kann, wodurch das Verhältnis zwischen dem Volumen der eingeschlossenen Luft und der Aluminiumoberfläche am effektivsten ist.

Es kann vorgesehen sein, dass der Wärmespeicher eine zweite Isoliereinrichtung umfasst, welche zweite Isoliereinrichtung an der ersten Isoliereinrichtung angeordnet ist, sodass die erste Isoliereinrichtung zwischen dem Behälter und der zweiten Isoliereinrichtung angeordnet ist und die erste Isoliereinrichtung umschließt, wobei vorzugsweise die zweite Isoliereinrichtung die erste Isoliereinrichtung formschließend, insbesondere kontaktierend, umschließt.

Es kann vorgesehen sein, dass die zweite Isolierungseinrichtung einen Deckelteil, einen Mantelteil mit zumindest zwei Halbschalen, und einen Bodenteil aufweist, wobei der Deckelteil, der Bodenteil und die zumindest zwei Halbschalen Verbindungseinrichtungen aufweisen, mittels derer der Deckelteil, der Bodenteil und die zumindest zwei Halbschalen formschlüssig miteinander verbindbar sind.

Es kann vorgesehen sein, dass je eine Verbindungseinrichtung eine Nut und eine zur Nut korrespondierende Feder umfasst.

Es kann vorgesehen sein, dass zur Behebung eines Spiels zwischen der Nut und der Feder ein Vlies, vorzugsweise ein Polyestervlies, angeordnet ist.

Ein solches Spiel bzw. Spalt, also ein Bereich, bei welchem die Nut und Feder nicht exakt formschlüssig ineinandergreifen, kann in der Regel 1 bis 5 mm groß sein.

Es kann vorgesehen sein, dass der Deckelteil der zweiten Isoliereinrichtung mittels zumindest einer Schraubverbindung, umfassend eine Schraube und ein dazu korrespondierendes Schraubgewinde, an dem Deckel des Behälters befestigbar ist.

Es kann vorgesehen sein, dass der Bodenteil der zweiten Isoliereinrichtung mittels zumindest einer Schraubverbindung, umfassend eine Schraube und ein dazu korrespondierendes Schraubgewinde, an dem Boden des Behälters befestigbar ist.

Es kann vorgesehen sein, dass die Schraube aus Kunststoff hergestellt ist.

Dadurch wird das Gesamtgewicht der Isoliereinrichtung bzw. des Wärmespeichers nicht übergebührlich angehoben bei gleichzeitiger robuster Fixierung der zweiten Isoliereinrichtung an dem Behälter und verhindert Wärmeableitung nach außen (Bildung einer Wärmebrücke).

Es kann vorgesehen sein, dass die erste Isoliereinrichtung eine bis mehrere Lagen der Aluminiumverbundfolie umfasst.

Es kann vorgesehen sein, dass der Deckelteil und der Mantelteil der zweiten Isoliereinrichtung aus einem gehärteten Schaumstoff auf Basis von Polystyrol, vorzugsweise aus Neopor oder EPP, gebildet ist.

Neopor ist leistungsstärker als herkömmliches weißes EPS (expandierbares Polystyrol) und ist darüber hinaus klimafreundlicher in der Herstellung, dadurch ist der ökologische Fußabdruck des Wärmespeichers geringer. Neopor findet eigentlich ausschließlich beim Hausbau Verwendung.

Die Wärmeleitfähigkeit dieses Materials ist größer oder gleich als 0,030 W/mK, wobei die Druckspannung bei 10% Stauchung in einem Bereich von 70 bis 160 kPa liegt. Der thermische Längenänderungskoeffizient reicht von 60 - 80*10⁻⁶ K⁻¹.

Es kann vorgesehen sein, dass der Bodenteil der zweiten Isoliereinrichtung ausgehärtetem Schaumstoff aus expandiertem Polypropylen, auch EPP genannt, gebildet ist.

Dadurch werden Schäden am Boden bei der Installation des Wärmespeichers vermieden.

Es kann vorgesehen sein, dass der Behälter Rohrstutzen zur Zu- und Ableitung des Wassers und/oder des Wärmeträgermediums umfasst, wobei die zweite Isoliereinrichtung jeweils zu den Rohrstutzen korrespondierende Öffnungsabschnitte aufweist, wobei zwischen den Rohrstutzen und den korrespondierenden Öffnungsabschnitten der zweiten Isoliereinrichtung zur Vermeidung von Wärmebrücken Polyestervlies angeordnet ist.

Da über die Isolierung durchdringende Wärmebrücken wie Rohrleitungen, Flansche, Rohrstutzen etc. mehr Wärme verloren gehen, als durch eine Erhöhung der Dämmstärke, ist zwischen den Rohrstutzen und den korrespondierenden Öffnungsabschnitten, in welchen die entsprechenden Rohrstutzen eingesetzt sind, Polyestervlies angeordnet.

Es kann vorgesehen sein, dass zwischen benachbarten Lagen der Aluminiumverbundfolie der ersten Isoliereinrichtung zumindest eines Lage Polyestervlies angeordnet ist.

Es kann vorgesehen sein, dass die erste Isoliereinrichtung zumindest eine erste Lage Polyestervlies umfasst, welche zwischen dem Behälter des Wärmespeichers und der zumindest einen Lage aus Aluminiumverbundfolie angeordnet ist, wobei die zumindest eine erste Lage Polyestervlies unmittelbar an dem Behälter angeordnet ist.

Es kann vorgesehen sein, dass die erste Isoliereinrichtung zumindest eine zweite Lage Polyestervlies umfasst, welche in Richtung außerhalb des Behälters nach der zumindest einen Lage Aluminiumverbundfolie angeordnet ist.

Nachfolgend wird die Erfindung anhand von beispielhaften Zeichnungen näher erläutert. Hierbei zeigt
Fig. 1 einen beispielhaften Wärmespeicher in einem Querschnitt, wobei der Wärmespeicher eine erste und eine zweite Isoliereinrichtung umfasst,
Fig. 2eine Detailquerschnittsansicht der ersten und zweiten Isoliereinrichtung, und
Fig. 3 eine Querschnittsansicht eines Mantelteils der zweiten Isoliereinrichtung, welcher zwei Halbschalen aufweist, welche mittels einer Verbindungseinrichtung verbindbar sind.

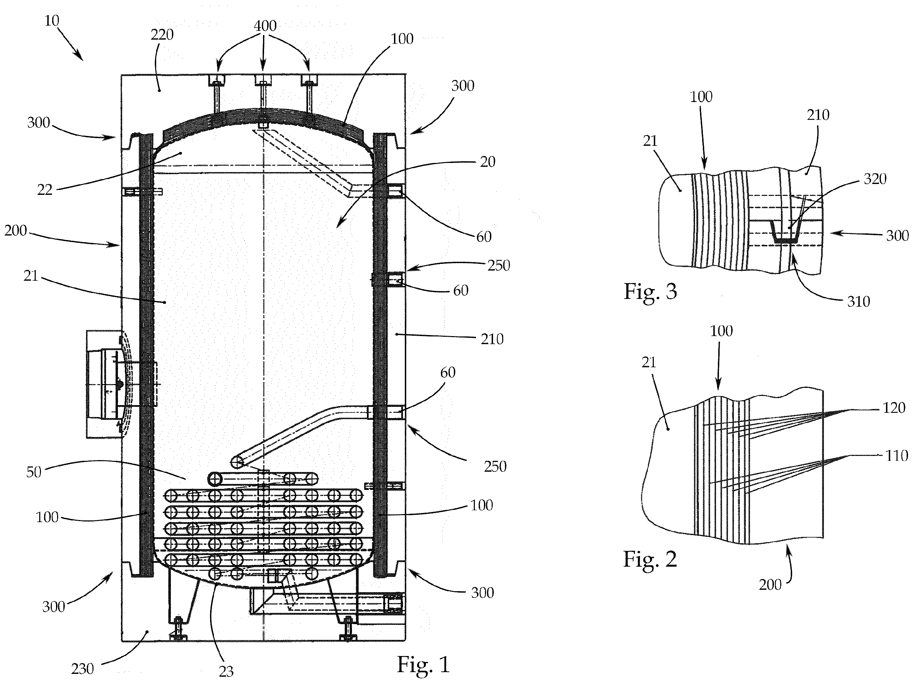

**Fig. 1** zeigt einen beispielhaften Wärmespeicher **10** zur Speicherung von Wasser mit einem Wärmetauscher **50** zur Erwärmung des Wassers, welcher Wärmespeicher **10** einen Behälter **20**, in welchem das zu erwärmende Wasser speicherbar ist, umfasst.

Der Behälter **20** umfasst einen zylinderförmigen Mantel **21**, an dessen Oberseite ein Deckel **22** und an dessen Unterseite ein Boden **23** angeordnet ist, wobei der Wärmetauscher **50**, welcher innerhalb des Behälters **20** angeordnet und eingerichtet ist, im Behälter **20** angeordnetes Wasser mit Hilfe eines in dem zumindest einen Wärmetauscher **50** transportierbaren Wärmeträgermediums zu erwärmen.

Ferner umfasst der Wärmespeicher **20** eine erste Isolierungseinrichtung **100**, welche eingerichtet ist, Wärmefluss von im Behälter **20** gespeicherter Wärme in Richtung außerhalb des Behälters **20** zu isolieren, wobei die erste Isolierungseinrichtung **100** auf einer Außenseite des Behälters **20** angeordnet ist.

Die erste Isolierungseinrichtung **100** umfasst in dem gezeigten Beispiel mehrere Lagen **110** gebildet aus einer Aluminiumverbundfolie, wobei eine Aluminiumverbundfolie aus zwei Aluminiumschichten gebildet ist, welche mehrere Luftpolster in regelmäßiger Anordnung einschließen.

Die Schichtung der Lagen der Aluminiumverbundfolie **110** ist skizzenhaft in **Fig. 2** dargestellt, wobei zwischen benachbarten Lagen **110** der Aluminiumverbundfolie der ersten Isoliereinrichtung **100** zumindest eine Lage Polyestervlies **120** angeordnet ist. Die erste Isoliereinrichtung **100** kann dabei mehrere Lagen **110** der Aluminiumverbundfolie umfassen, wobei beispielsweise fünf Lagen **110** der Aluminiumverbundfolie.

Die erste Isoliereinrichtung **100** umfasst dabei zumindest eine erste Lage Polyestervlies, welche zwischen dem Behälter **20** des Wärmespeichers **10** und der Lagen aus Aluminiumverbundfolie **110** angeordnet ist, wobei die zumindest eine erste Lage Polyestervlies unmittelbar an dem Behälter **20** angeordnet ist.

Zusätzlich umfasst der Wärmespeicher **10** eine zweite Isoliereinrichtung **200**, welche zweite Isoliereinrichtung **200** an der ersten Isoliereinrichtung **100** angeordnet ist, sodass die erste Isoliereinrichtung **100** zwischen dem Behälter **20** und der zweiten Isoliereinrichtung **200** angeordnet ist, welche die erste Isoliereinrichtung **100** umschließt, wobei die zweite Isoliereinrichtung **200** die erste Isoliereinrichtung **100** formschließend und kontaktierend umschließt.

Die zweite Isolierungseinrichtung **200** umfasst einen Deckelteil **220**, einen Mantelteil **210** mit zumindest zwei Halbschalen, und einen Bodenteil **230**, wobei der Deckelteil **220**, der Bodenteil **230** und die zumindest zwei Halbschalen Verbindungseinrichtungen **300** aufweisen, mittels derer der Deckelteil **220**, der Bodenteil **230** und die zumindest zwei Halbschalen formschlüssig miteinander verbindbar sind.

Dabei umfasst je eine Verbindungseinrichtung **300** eine Nut **310** und eine zur Nut **310** korrespondierende Feder **320**, wobei zur Behebung eines Spiels zwischen der Nut **310** und der Feder **320** ein Vlies, vorzugsweise ein Polyestervlies, angeordnet ist, wie beispielsweise in **Fig. 3** zu sehen ist.

Zur Fixierung bzw. Befestigung der zweiten Isoliereinrichtung **200** an dem Behälter ist der Deckelteil **220** und der Mantelteil **210** bzw. die beiden Halbschalen der zweiten Isoliereinrichtung **200** mittels zumindest einer Schraubverbindung **400**, umfassend eine Schraube und ein dazu korrespondierendes Schraubgewinde, an dem Deckel **22** bzw. an dem Boden **23** des Behälters **20** befestigbar. Die Schraube der Schraubverbindung **400** kann dabei aus Kunststoff hergestellt sein.

Ferner ist der Deckelteil **220** und der Mantelteil **210** der zweiten Isoliereinrichtung **200** aus einem gehärteten Schaumstoff auf Basis von Polystyrol, nämlich aus Neopor oder EPP, gebildet.

Der Bodenteil **230** der zweiten Isoliereinrichtung **200** hingegen ist aus ausgehärtetem Schaumstoff aus expandiertem Polypropylen, auch EPP genannt, gebildet, um Schäden am Boden bei der Installation des Wärmespeichers zu vermeiden.

Die erste Isoliereinrichtung **100** umfasst dabei weiters zumindest eine zweite Lage Polyestervlies, welche in Richtung außerhalb des Behälters **20** nach der zumindest einen Lage Aluminiumverbundfolie **110** und unmittelbar an der zweiten Isoliereinrichtung **200** angeordnet ist, d.h. dass der Schichtaufbau beginnend beim Behälter **20** mit einer ersten Lage Polyestervlies beginnt, danach mehrere Lagen aus Aluminiumverbund **110** mit zwischenliegenden Lagen Polyestervlies, und zwischen letzter Lage aus Aluminiumverbund **110** und der zweiten Isoliereinrichtung **200** eine Lage Polyestervlies.

Weiters umfasst der Behälter **20** Rohrstutzen **60** zur Zu- und Ableitung des Wassers und/oder des Wärmeträgermediums, an welche Rohrstutzen weitere Rohrleitungen installiert werden können, wobei die zweite Isoliereinrichtung **200** jeweils zu den Rohrstutzen **60** korrespondierende Öffnungsabschnitte **250** aufweist, in welche die Rohrstutzen eingesetzt sind.

Zwischen den Rohrstutzen **60** und den korrespondierenden Öffnungsabschnitten **250** der zweiten Isoliereinrichtung **200** ist zur Vermeidung von Wärmebrücken Polyestervlies angeordnet.

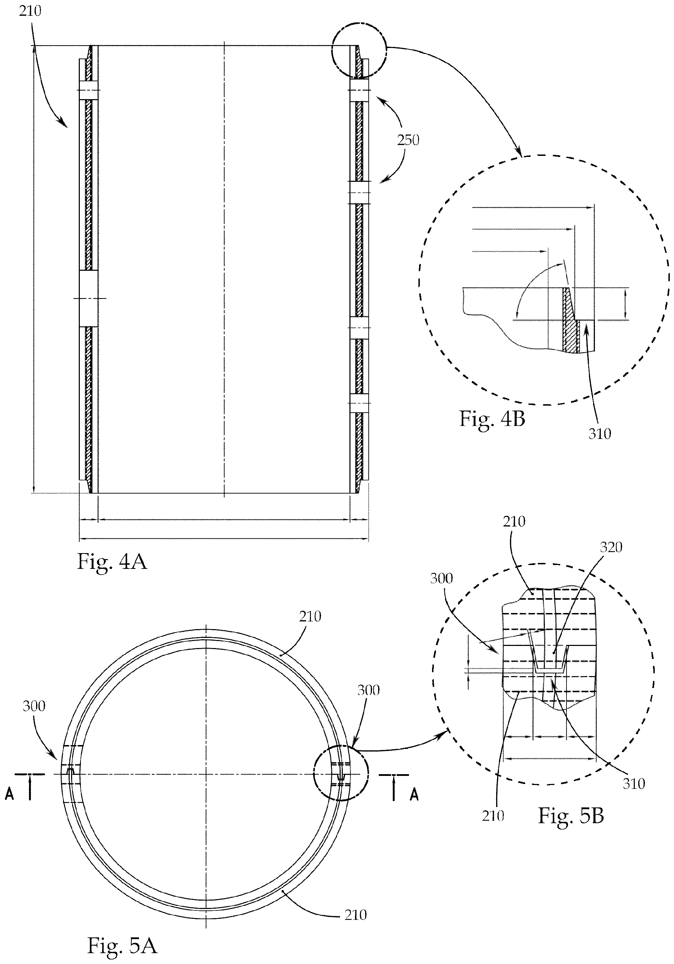

**Fig. 4A** zeigt einen Querschnitt entlang der Linie A-A der Mantelteile **210**, wobei **Fig. 4B** eine Detailansicht einer an den Mantelteilen **210** angeordneten Nut **310** für eine formschlüssige Verbindung mit dem Deckelteil der zweiten Isoliereinrichtung, wobei solche Nuten **310** auch am unteren Ende der Mantelteile angeordnet sind, welche mit den korrespondieren Federn des Bodenteils korrespondieren.

**Fig. 5A** zeigt eine Ansicht von oben der zusammengefügten Mantelteile **210** und deren formschlüssige Verbindung **300**, wobei **Fig. 5B** eine Detailansicht der Verbindung **300** zeigt, wobei das Gesagte zu **Fig. 2** analog gilt.

### BEZUGSZEICHENLISTE

| | |
|---|---|
| Wärmespeicher | 10 |
| Behälter | 20 |
| Mantel | 21 |
| Deckel | 22 |
| Boden | 23 |
| Wärmetauscher | 50 |
| Rohrstutzen | 60 |
| Erste Isolierungseinrichtung | 100 |
| Lage Aluminiumverbundfolie | 110 |
| Lage Polyestervlies | 120 |
| Zweite Isoliereinrichtung | 200 |
| Mantelteil | 210 |
| Deckelteil | 220 |
| Bodenteil | 230 |
| Öffnungsabschnitt... | 250 |
| Verbindungseinrichtung | 300 |
| Nut | 310 |
| Feder | 320 |
| Schraubverbindung | 400 |

## Patentansprüche

1. Wärmespeicher (10) zur Speicherung von Wasser mit zumindest einem Wärmetauscher (50) zur Erwärmung des Wassers, welcher Wärmespeicher (10) Folgendes umfasst:
- einen Behälter (20), in welchem das zu erwärmende Wasser speicherbar ist, welcher Behälter einen zylinderförmigen Mantel (21) umfasst, an dessen Oberseite ein Deckel (22) und an dessen Unterseite ein Boden (23) angeordnet ist,
- zumindest einen Wärmetauscher (50), welcher innerhalb des Behälters (20) angeordnet ist und eingerichtet ist, im Behälter (20) angeordnetes Wasser mit Hilfe eines in dem zumindest einen Wärmetauscher (50) transportierbaren Wärmeträgermediums zu erwärmen, und
- eine erste Isolierungseinrichtung (100), welche eingerichtet ist, Wärmefluss von im Behälter (20) gespeicherter Wärme in Richtung außerhalb des Behälters (20) zu isolieren, wobei die erste Isolierungseinrichtung (100) auf einer Außenseite des Behälters (20) angeordnet ist,
**dadurch gekennzeichnet, dass**
die erste Isolierungseinrichtung (100) zumindest eine Lage (110) gebildet aus einer Aluminiumverbundfolie aufweist, wobei eine Aluminiumverbundfolie aus zwei Aluminiumschichten gebildet ist, welche mehrere Luftpolster in regelmäßiger Anordnung einschließen.

2. Wärmespeicher nach Anspruch 1, **dadurch gekennzeichnet, dass** der Wärmespeicher (10) eine zweite Isoliereinrichtung (200) umfasst, welche zweite Isoliereinrichtung (200) an der ersten Isoliereinrichtung (100) angeordnet ist, sodass die erste Isoliereinrichtung (100) zwischen dem Behälter (20) und der zweiten Isoliereinrichtung (200) angeordnet ist, welche die erste Isoliereinrichtung (100) umschließt, wobei vorzugsweise die zweite Isoliereinrichtung (200) die erste Isoliereinrichtung (100) formschließend, insbesondere kontaktierend, umschließt.

3. Wärmespeicher nach Anspruch 2, **dadurch gekennzeichnet, dass** die zweite Isolierungseinrichtung (200) einen Deckelteil (220), einen Mantelteil (210) mit zumindest zwei Halbschalen, und einen Bodenteil (230) aufweist, wobei der Deckelteil (220), der Bodenteil (230) und die zumindest zwei Halbschalen Verbindungseinrichtungen (300) aufweisen, mittels derer der Deckelteil (220), der Bodenteil (230) und die zumindest zwei Halbschalen formschlüssig miteinander verbindbar sind.

4. Wärmespeicher nach Anspruch 3, **dadurch gekennzeichnet, dass** je eine Verbindungseinrichtung (300) eine Nut (310) und eine zur Nut (310) korrespondierende Feder (320) umfasst.

5. Wärmespeicher nach Anspruch 5, **dadurch gekennzeichnet, dass** zur Behebung eines Spiels zwischen der Nut (310) und der Feder (320) ein Vlies, vorzugsweise ein Polyestervlies, angeordnet ist.

6. Wärmespeicher nach einem der Ansprüche 3 bis 5, **dadurch gekennzeichnet, dass** der Deckelteil (220) der zweiten Isoliereinrichtung (200) mittels zumindest einer Schraubverbindung (400), umfassend eine Schraube und ein dazu korrespondierendes Schraubgewinde, an dem Deckel (22) des Behälters (20) befestigbar ist.

7. Wärmespeicher nach einem der Ansprüche 3 bis 6, **dadurch gekennzeichnet, dass** der Bodenteil (230) der zweiten Isoliereinrichtung (200) mittels zumindest einer Schraubverbindung (400), umfassend eine Schraube und ein dazu korrespondierendes Schraubgewinde, an dem Boden (23) des Behälters (20) befestigbar ist.

8. Wärmespeicher nach Anspruch 6 oder 7, **dadurch gekennzeichnet, dass** die Schraube aus Kunststoff hergestellt ist.

9. Wärmespeicher nach einem der Ansprüche 1 bis 8, **dadurch gekennzeichnet, dass** die erste Isoliereinrichtung (100) eine oder mehrere Lagen (110) der Aluminiumverbundfolie umfasst.

10. Wärmespeicher nach einem der Ansprüche 3 bis 9, **dadurch gekennzeichnet, dass** der Deckelteil (220) und der Mantelteil (210) der zweiten Isoliereinrichtung (200) aus einem gehärteten Schaumstoff auf Basis von Polystyrol, vorzugsweise aus Neopor oder EPP, gebildet ist.

11. Wärmespeicher nach einem der Ansprüche 3 bis 10, **dadurch gekennzeichnet, dass** der Bodenteil (230) der zweiten Isoliereinrichtung (200) ausgehärtetem Schaumstoff aus expandiertem Polypropylen, auch EPP genannt, gebildet ist.

12. Wärmespeicher nach einem der Ansprüche 2 bis 11, **dadurch gekennzeichnet, dass** der Behälter (20) Rohrstutzen (60) zur Zu- und Ableitung des Wassers und/oder des Wärmeträgermediums umfasst, wobei die zweite Isoliereinrichtung (200) jeweils zu den Rohrstutzen (60) korrespondierende Öffnungsabschnitte (250) aufweist, wobei zwischen den Rohrstutzen (60) und den korrespondierenden Öffnungsabschnitten (250) der zweiten Isoliereinrichtung (200) zur Vermeidung von Wärmebrücken Polyestervlies angeordnet ist.

13. Wärmespeicher nach einem der Ansprüche 1 bis 12, **dadurch gekennzeichnet, dass** zwischen benachbarten Lagen (110) der Aluminiumverbundfolie der ersten Isoliereinrichtung (100) zumindest eine Lage Polyestervlies (120) angeordnet ist.

14. Wärmespeicher nach einem der Ansprüche 1 bis 13, **dadurch gekennzeichnet, dass** die erste Isoliereinrichtung (100) zumindest eine erste Lage Polyestervlies umfasst, welche zwischen dem Behälter (20) des Wärmespeichers (10) und der zumindest einen Lage aus Aluminiumverbundfolie (110) angeordnet ist, wobei die zumindest eine erste Lage Polyestervlies unmittelbar an dem Behälter (20) angeordnet ist.

15. Wärmespeicher nach Anspruch 14, **dadurch gekennzeichnet, dass** die erste Isoliereinrichtung (100) zumindest eine zweite Lage Polyestervlies umfasst, welche in Richtung außerhalb des Behälters (20) nach der zumindest einen Lage Aluminiumverbundfolie (110) angeordnet ist.

## Claims

1. Heat accumulator (10) for storing water with at least one heat exchanger (50) for heating the water, which heat accumulator (10) comprises the following:
- a container (20) in which the water to be heated can be stored, which container comprises a cylindrical jacket (21), on the upper side of which a lid (22) is arranged and on the lower side of which a bottom (23) is arranged,
- at least one heat exchanger (50), which is arranged inside the container (20) and is arranged to heat water arranged in the container (20) by means of a heat transfer medium transportable in the at least one heat exchanger (50), and
- a first insulating means (100) which is arranged to insulate heat flow of heat stored in the container (20) towards the outside of the container (20), wherein the first insulating means (100) is arranged on an outside of the container (20),
**characterized in that**
the first insulating means (100) comprises at least one layer (110) formed of an aluminum composite foil, wherein an aluminum composite foil is formed of two aluminum layers enclosing a plurality of air cushions in a regular arrangement.

2. Heat accumulator according to claim 1, **characterized in that** the heat accumulator (10) comprises a second insulating device (200), which second insulating device (200) is arranged on the first insulating device (100), so that the first insulating device (100) is arranged between the container (20) and the second insulating device (200), which encloses the first insulating device (100), preferably the second insulating device (200) enclosing the first insulating device (100) in a form-fitting, in particular contacting, manner.

3. Heat accumulator according to claim 2, **characterized in that** the second insulating device (200) has a cover part (220), a jacket part (210) with at least two half shells, and a base part (230), the cover part (220), the base part (230) and the at least two half shells having connecting devices (300) by means of which the cover part (220), the base part (230) and the at least two half shells can be connected to one another in a form-fitting manner.

4. Heat accumulator according to claim 3, **characterized in that** one connecting device (300) each comprises a groove (310) and a tongue (320) corresponding to the groove (310).

5. Heat accumulator according to claim 5, **characterized in that** a fleece, preferably a polyester fleece, is arranged between the groove (310) and the tongue (320) to take up a play.

6. Heat accumulator according to one of claims 3 to 5, **characterized in that** the lid part (220) of the second insulating device (200) can be fastened to the lid (22) of the container (20) by means of at least one screw connection (400) comprising a screw and a screw thread corresponding thereto.

7. Heat accumulator according to any one of claims 3 to 6, **characterized in that** the bottom part (230) of the second insulating device (200) can be fastened to the bottom (23) of the container (20) by means of at least one screw connection (400), comprising a screw and a screw thread corresponding thereto.

8. Heat accumulator according to claim 6 or 7, **characterized in that** the screw is made of plastic.

9. Heat accumulator according to any one of claims 1 to 8, **characterized in that** the first insulating means (100) comprises one or more layers (110) of the aluminum composite foil.

10. Heat accumulator according to any one of claims 3 to 9, **characterized in that** the cover part (220) and the jacket part (210) of the second insulating device (200) are formed from a cured polystyrene-based foam, preferably from neopor or EPP.

11. Heat accumulator according to any one of claims 3 to 10, **characterized in that** the bottom part (230) of the second insulating device (200) is formed of cured foam based on expanded polypropylene, also called EPP.

12. Heat accumulator according to one of claims 2 to 11, **characterized in that** the container (20) comprises pipe connections (60) for the supply and discharge of the water and/or the heat transfer medium, the second insulating device (200) having opening sections (250) corresponding in each case to the pipe connections (60), polyester fleece being arranged between the pipe connections (60) and the corresponding opening sections (250) of the second insulating device (200) in order to avoid thermal bridges.

13. Heat accumulator according to one of claims 1 to 12, **characterized in that** at least one layer of polyester fleece (120) is arranged between adjacent layers (110) of the aluminum composite foil of the first insulating device (100).

14. Heat accumulator according to any one of claims 1 to 13, **characterized in that** the first insulating device (100) comprises at least one first layer of polyester fleece arranged between the container (20) of the heat accumulator (10) and the at least one layer of aluminum composite foil (110), wherein the at least one first layer of polyester fleece is arranged directly on the container (20).

15. Heat accumulator according to claim 14, **characterized in that** the first insulating means (100) comprises at least one second layer of polyester fleece arranged downstream of the at least one layer of aluminum composite foil (110) in the direction outside the container (20).

## Revendications

1. Accumulateur de chaleur (10) pour stocker de l'eau avec au moins un échangeur de chaleur (50) pour chauffer l'eau, lequel accumulateur de chaleur (10) comprend ce qui suit :
- un récipient (20) dans lequel l'eau à chauffer peut être stockée, lequel récipient comprend une enveloppe cylindrique (21) sur le côté supérieur de laquelle est disposé un couvercle (22) et sur le côté inférieur de laquelle est disposé un fond (23),
- au moins un échangeur de chaleur (50) qui est disposé à l'intérieur du récipient (20) et qui est conçu pour chauffer l'eau disposée dans le récipient (20) à l'aide d'un fluide caloporteur pouvant être transporté dans le au moins un échangeur de chaleur (50), et
- un premier dispositif d'isolation (100) qui est adapté pour isoler le flux de chaleur de la chaleur stockée dans le récipient (20) vers l'extérieur du récipient (20), le premier dispositif d'isolation (100) étant disposé sur un côté extérieur du récipient (20),
**caractérisé en ce que**
le premier dispositif d'isolation (100) comprend au moins une couche (110) formée d'une feuille composite d'aluminium, dans lequel une feuille composite d'aluminium est formée de deux couches d'aluminium qui enferment une pluralité de coussins d'air dans une disposition régulière.

2. Accumulateur de chaleur selon la revendication 1, **caractérisé en ce que** l'accumulateur de chaleur (10) comprend un deuxième dispositif d'isolation (200), lequel deuxième dispositif d'isolation (200) est disposé sur le premier dispositif d'isolation (100), de sorte que le premier dispositif d'isolation (100) est disposé entre le récipient (20) et le deuxième dispositif d'isolation (200) qui entoure le premier dispositif d'isolation (100), le deuxième dispositif d'isolation (200) entourant de préférence le premier dispositif d'isolation (100) par complémentarité de forme, notamment par contact.

3. Accumulateur de chaleur selon la revendication 2, **caractérisé en ce que** le deuxième dispositif d'isolation (200) présente une partie couvercle (220), une partie enveloppe (210) avec au moins deux demi-coques, et une partie fond (230), la partie couvercle (220), la partie fond (230) et les au moins deux demi-coques présentant des dispositifs de liaison (300) au moyen desquels la partie couvercle (220), la partie fond (230) et les au moins deux demi-coques peuvent être reliées entre elles par complémentarité de forme.

4. Accumulateur de chaleur selon la revendication 3, **caractérisé en ce que** chaque dispositif de liaison (300) comprend une rainure (310) et un ressort (320) correspondant à la rainure (310).

5. Accumulateur de chaleur selon la revendication 5, **caractérisé en ce qu'**un non-tissé, de préférence un non-tissé de polyester, est disposé entre la rainure (310) et le ressort (320) pour éliminer un jeu.

6. Accumulateur de chaleur selon l'une des revendications 3 à 5, **caractérisé en ce que** la partie couvercle (220) du deuxième dispositif d'isolation (200) peut être fixée au couvercle (22) du récipient (20) au moyen d'au moins un assemblage vissé (400), comprenant une vis et un filet de vis correspondant.

7. Accumulateur de chaleur selon l'une des revendications 3 à 6, **caractérisé en ce que** la partie de fond (230) du deuxième dispositif d'isolation (200) peut être fixée au fond (23) du récipient (20) au moyen d'au moins un assemblage vissé (400) comprenant une vis et un filet de vis correspondant.

8. Accumulateur de chaleur selon la revendication 6 ou 7, **caractérisé en ce que** la vis est fabriquée en matière plastique.

9. Accumulateur de chaleur selon l'une des revendications 1 à 8, **caractérisé en ce que** le premier dispositif d'isolation (100) comprend une ou plusieurs couches (110) de la feuille composite d'aluminium.

10. Accumulateur de chaleur selon l'une des revendications 3 à 9, **caractérisé en ce que** la partie couvercle (220) et la partie enveloppe (210) du deuxième dispositif d'isolation (200) sont formées d'une mousse durcie à base de polystyrène, de préférence de néopor ou d'EPP.

11. Accumulateur de chaleur selon l'une des revendications 3 à 10, **caractérisé en ce que** la partie de fond (230) du deuxième dispositif d'isolation (200) est formée d'une mousse durcie de polypropylène expansé, également appelée EPP.

12. Accumulateur de chaleur selon l'une des revendications 2 à 11, **caractérisé en ce que** le réservoir (20) comprend des tubulures (60) pour l'amenée et l'évacuation de l'eau et/ou du fluide caloporteur, le deuxième dispositif d'isolation (200) présentant des sections d'ouverture (250) correspondant respectivement aux tubulures (60), un non-tissé de polyester étant disposé entre les tubulures (60) et les sections d'ouverture (250) correspondantes du deuxième dispositif d'isolation (200) pour éviter les ponts thermiques.

13. Accumulateur de chaleur selon l'une des revendications 1 à 12, **caractérisé en ce qu'**au moins une couche de non-tissé en polyester (120) est disposée entre des couches voisines (110) de la feuille composite en aluminium du premier dispositif d'isolation (100).

14. Accumulateur de chaleur selon l'une quelconque des revendications 1 à 13, **caractérisé en ce que** le premier dispositif d'isolation (100) comprend au moins une première couche de polyester non tissé disposée entre le réservoir (20) de l'accumulateur de chaleur (10) et ladite au moins une couche de film composite en aluminium (110), ladite au moins une première couche de polyester non tissé étant disposée directement sur le réservoir (20).

15. Accumulateur de chaleur selon la revendication 14, **caractérisé en ce que** le premier dispositif d'isolation (100) comprend au moins une deuxième couche de polyester non tissé qui est disposée en direction de l'extérieur du récipient (20) après la au moins une couche de film composite en aluminium (110).
